(19) Europäisches Patentamt
European Patent Office
Office européen des brevets

(11) **EP 3 517 943 A1**

(12) **EUROPEAN PATENT APPLICATION**

(43) Date of publication:
**31.07.2019 Bulletin 2019/31**

(51) Int Cl.:
*G01N 27/333* (2006.01)   *G01N 27/36* (2006.01)
*G01N 27/30* (2006.01)

(21) Application number: **18154257.2**

(22) Date of filing: **30.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Mettler-Toledo GmbH**
**8606 Greifensee (CH)**

(72) Inventors:
• **RUTZ, Andreas**
  **8052 Zürich (CH)**
• **LIMON PETERSEN, Juan**
  **8906 Bonstetten (CH)**
• **EHRISMANN, Philippe**
  **8610 Uster (CH)**

(74) Representative: **Mettler-Toledo**
**IP Department**
**Im Langacher 44**
**8606 Greifensee (CH)**

(54) **ION-SENSITIVE GLASS ELECTRODE, MEASUREMENT UNIT AND METHOD FOR MANUFACTURING**

(57)    The ion-sensitive glass electrode (10), which serves for measuring an ion activity in a measured solution (5), comprises an ion-sensitive glass membrane (11) and at least one holding member (14; 18; 18') that is connected to the ion-sensitive glass membrane (11) and that holds the ion-sensitive glass membrane (11) under compressive stress over the whole range or part of the range of the specified operating temperature of the ion-sensitive glass electrode (10). The measurement unit (1), which is provided for an ion-sensitive solid-state electrode (10), comprises a layered structure (6) with the substrate (14) and the ion-sensitive glass membrane (11) in the embodiment of a glass membrane, which directly or via at least one intermediate layer (12; 13) adheres to the substrate (14). According to the inventive method the ion-sensitive glass membrane (11) is connected to the at least one holding member (14; 18; 18') such that the ion-sensitive glass membrane (11) is held under compressive stress over the whole range or part of the range of the specified operating temperature of the ion-sensitive glass electrode (10).

Fig. 2

## Description

The present invention relates to an ion-sensitive glass electrode, a measurement unit for an ion-sensitive glass electrode and to a method for manufacturing an ion-sensitive electrode or a measurement unit.

In laboratories and industrial processes, often ion-sensitive glass electrodes are used for measuring ion activities, in particular pH-values. These glass electrodes or pH-electrodes typically comprise a thin ion-sensitive glass membrane normally melted to the end piece of a glass shaft of the glass electrode.

Principles of pH-measurement and related pH-electrodes are described in "A guide to pH-measurement", 03/2016, Mettler-Toledo GmbH. The pH-electrode typically consists of a glass shaft at the end with a thin glass membrane that is sensitive to $H^+$-ions. The outside of this membrane glass forms an outer gel layer when the membrane comes into contact with a measured solution. An inner gel layer is also formed on the inside of the membrane glass, since the electrode is filled with an internal buffer. Depending on the pH-value present in the measured solution, the $H^+$-ions either diffuse into or out of the outer gel layer, depending on the $H^+$-ion concentration of the measured solution. If the solution is alkaline the $H^+$-ions diffuse out of the layer and a negative charge is established on the outer side of the membrane. Since the internal buffer has a constant pH-value, the potential on the inner surface of the membrane remains constant during the measurement. The potential measured by the pH-electrode is therefore the difference between the constant inner and the variable outer charge of the ion-sensitive glass membrane. Additionally the inner buffer contains a constant concentration of chloride that produces a constant potential to the silver / silver chloride (Ag/AgCl) electrode that is immersed in the same inner buffer. This electrochemical chain connects the potential of the glass membrane to the potential of the electrical wire leading out of the electrode.

The potential measured by the pH-electrode is compared to a reference potential provided by a reference electrode, typically an Ag/AgCl-electrode immersed in a reference solution that is indirectly in contact with the measured solution via a junction. This conventional reference electrode will therefore always produce the same, constant potential, irrespective of the solution to be measured.

Ion sensitive electrodes with a glass membrane exhibit excellent measurement properties. pH-electrodes for example show favourable properties in terms of slope, long-term stability, selectivity and detection limit, but also exhibit disadvantages. Classic glass electrodes can only be used in a given orientation. In addition, glass electrodes show mechanical weaknesses, since they can break easily with the result that bits of broken glass get into the measured solution, which must strictly be avoided particularly in processes of the food industry.

DE19714474A1 discloses an electro-chemical sensor with an ion-sensitive glass membrane, which is in direct contact with a steel-ceramic substrate, with all layers produced by thick film technology. It is stated that in layered structures with a metal layer and a glass layer having different thermal expansion coefficients the glass layer may get damaged or even destroyed when exposed to temperature changes that cause cracks or fissures. In order to avoid this problem, use of layers is recommended in DE3727485A1 that exhibit thermal expansion coefficients $\alpha$, which are identical or differ at most by a value $\Delta\alpha < 6 \ 10^{-7} \ / \ K$.

In DE19714474A1, it is further stated, that the problem of glass breaking occurs not only with solid-state electrodes but also with conventional glass electrodes that comprise a thin glass membrane melted to a glass shaft as described in "A guide to pH-measurement", 03/2016, Mettler-Toledo GmbH. In order to avoid glass breakage with this type of electrodes in DE2220841A1 it is recommended that the adjoining materials exhibit thermal expansion coefficients $\alpha$, which are identical or differ at most with a value $\Delta\alpha < 7 \ 10^{-7}$/K. Hence, the problem of glass breakage occurs in various embodiments of known electrodes that comprise a thin-walled ion-sensitive glass membrane.

DE2220841A1 discloses an ion-sensitive electrode, in which an inner buffer solution that creates a constant potential is replaced by depositing metal on an ion-sensitive glass membrane. Since an internal buffer is replaced by solid material, this type of ion-sensitive electrode is called solid-state ion-sensitive electrode. Consequently, such electrodes can be manufactured with significantly reduced dimensions.

Due to the high impedance of ion-sensitive glass membranes, the electrical isolation of metal elements is often critical. Further, due to the exposure to ambient chemical reactants such as oxygen ($O_2$), water ($H_2O$), nitrogen ($N_2$), carbon dioxide ($CO_2$), etc., specific metal electrodes may get damaged or destroyed. Furthermore, chemical interactions between specific electrically conducting layers and the glass layer may occur, which may lead to damage or destruction of the glass layer. Still further, performance and properties of ion-selective solid-state electrodes compared to conventional ion-sensitive electrodes are still not as desired. Furthermore, limitations of the measurement range and insufficient stability with regard to pressure and temperature were experienced.

US4632732A discloses a solid-state electrode with an ion-sensitive glass membrane connected to a glass tube and a solid contact material consisting of lithium-vanadium-oxide ($Li_XV_2O_5$), which forms an intercalation electrode. The solid contact material is sintered to the inner side of the glass membrane and electrically connected to a shielded electrode cable. DE3727485A1 discloses a further solid-state electrode with an ion-sensitive glass membrane connected to a glass tube and an intercalation electrode consisting of material that is also used for lithium batteries. Such intercalation electrodes may exhibit intrinsic electrochemical hysteresis which may impair the performance of the ion-sensitive electrode. Furthermore, exposure of the electrode materials to ambient chemical reactants (such as $O_2$, $H_2O$, $N_2$, $CO_2$, etc.) may further degrade performance.

Further, with regard to using a single phase or multiphase lithium layer adjoining a thin-walled ion-sensitive glass membrane, it is important to note that studies of lithium / silicon-dioxide ($Li/SiO_2$) systems have shown that in these systems a substantial reduction of the glass matrix can occur, which significantly degrades the performance of the ion-selective electrode and drastically limits its lifespan.

DE19620568A1 discloses an ion-sensitive glass electrode comprising a double layer glass membrane with an inner glass layer with electronic and ionic conductivity and an ion-sensitive glass layer facing the measured solution. The glass layers are melted together and form a thin walled spherical or cylindrical membrane that is melted to an electrode shaft of glass, as recommended in DE2220841A1, with a linear thermal expansion coefficient matching those of the glass layers. The inner surface of the electrode body, formed by the membrane and the electrode shaft, is completely covered with a solid adherent silver layer connected to a contact wire. Inside the electrode body an elastic support body is provided that preferably is made of silicone rubber. The elastic support body has a sealing function which is sufficient for the used materials but would scarcely fulfil the sealing requirements of materials that are easily reacting with ambient chemical reactants.

DE10018750C2 discloses a further ion-sensitive glass electrode comprising a glass membrane with an outer side in contact with a measured solution and with an inner side in firm contact with a metal contact layer, which is connected to an internal conductor.

US4133735A discloses an ion-sensitive electrode with a substrate having a planar wafer surface, on which a continuous conducting layer is formed by either thin-film vapour deposition or thick-film screening processes. A first region of the continuous conducting layer and contiguous portions of the wafer surface are covered by a continuous membrane layer of a pH-sensitive glass. An insulated connecting lead is connected directly to a second region of the conducting layer. Alternatively, an electronic device chip with output leads is bonded to the wafer and connected with its input via the connecting lead to the second region of the conducting layer. The exposed conducting elements of the electrode, including the second region of the conducting layer, the active device chip, and all exposed portions of the leads, are covered by a protective fluid-tight seal. The seal may be formed from a flattened, non-pH-sensitive glass tube which is filled with a cured epoxy resin. Alternatively, the seal may be formed from heat-shrinkable tubing, e.g. composed of polyvinyl chloride, which is filled with an appropriate hydrophobic potting material such as beeswax. A sealing of this type, which is typically used in the art, does not satisfy the demands of electrode materials that are more sensitive to the exposure of ambient chemical reactants (such as $O_2$, $H_2O$, $N_2$, $CO_2$, etc.).

US4280889A discloses a solid-state ion-sensitive electrode using silver/silver chloride (Ag/AgCl) electrodes for a reference electrode and for a pH measuring electrode which can be provided as separate units or combined in a common encapsulation. For both electrodes a layered structure is provided with an insulating substrate, on which a first layer of chromium followed by a second layer of silver, a third layer of silver chloride and a final ion sensitive glass layer are deposited. For the pH measuring electrode the thermal expansion coefficients of the glass layer and the adjoining layer of silver chloride are matched, so that cracks in the glass layer are avoided. For the reference electrode the thermal expansion coefficients of the glass layer and the adjoining layer of silver chloride are mismatched, so that cracks in the glass layer are randomly caused during temperature cycling of the reference electrode. These cracks provide ion conduction paths to the silver chloride layer from an aqueous solution in which the reference electrode is immersed during ion concentration measurements. US4280889A therefore teaches matching thermal expansion coefficients of adjoining layers of a layered structure in order to avoid cracks in the glass layer and to mismatching adjoining layers of a layered structure in order to wilfully create cracks that fulfil a specific function.

EP0420983A1 discloses a solid phase electrode with an ion-sensitive membrane that is connected to a glass tube and that, on the side facing the glass tube, is provided with a solid phase contact made of an oxide compound.

WO/0104615A1 discloses a solid-state electrode comprising a metal core of a lithium alloy, that adheres firmly to the inner face of an ion-sensitive glass membrane that is containing lithium and that is melted to a lower end of a glass tube made of conventional glass. The metal core is protected from ambient influences by means of a metal sealing plug that is inserted into the glass tube. However, it appears that this kind of sealing is not optimal, since ambient chemical reactants (such as $O_2$, $H_2O$, $N_2$, $CO_2$, etc.) may intrude through capillaries remaining between the inside of the glass tube and the outside of the metal core. Such capillaries may typically occur together with changes of the ambient temperature e.g. during measurement processes.

Hence, known conventional ion-sensitive electrodes and solid-state ion-sensitive electrodes have the drawback that cracks and fissures can occur in the ion-sensitive glass membrane or ion-sensitive glass layer. Further drawbacks relate to the destruction of the used materials or layers when exposed to ambient chemical reactants or the destruction of the ion-sensitive glass membrane when exposed to the adjoining metal layers. Critical is also the impact of mechanical forces and tensions during handling and operation of the ion-sensitive electrode, which may lead to damage of the glass membrane.

The invention is therefore based on the object of defining an improved ion-sensitive electrode, such as a pH electrode, and to an improved measurement unit for such an ion-sensitive electrode that are provided with an ion-sensitive glass membrane. Further, a method for manufacturing such an improved ion-sensitive electrode and improved measurement unit shall be defined.

The improved ion-sensitive glass shall be provided in a non-solid-state embodiment and in a solid-state embodiment preferably provided with the improved measurement unit.

The improved ion-sensitive electrode and measurement unit shall have improved robustness and durability so that an increased lifespan can be achieved even in a demanding process environment. In particular, the ion-sensitive glass membrane shall be well protected so that cracks and fissures in the ion-sensitive glass membrane can be avoided. In preferred embodiments, the elements of the ion-sensitive electrode shall be protected against ambient chemical and physical influences when being stored, handled or used for measurement purposes.

The inventive method shall allow assembling of the inventive ion-sensitive electrode in solid-state embodiment or non-solid-state embodiment practically without additional effort.

The ion-sensitive glass electrode and measurement unit, which serve for measuring an ion activity in a measured solution, comprise an ion-sensitive glass membrane and at least one holding member that is connected to the ion-sensitive glass membrane and that holds the ion-sensitive glass membrane under compressive stress over the whole range or part of the range of the specified operating temperature of the ion-sensitive glass electrode.

The measurement unit, which is provided for a solid-state ion-sensitive glass electrode comprises a layered structure with a substrate and the ion-sensitive glass membrane in the embodiment of a glass layer, which directly or via at least one intermediate layer adheres to the substrate.

According to the inventive steps are provided, the ion-sensitive glass membrane is connected to the at least one holding member such that the ion-sensitive glass layer is held under compressive stress over the whole range or part of the range of the specified operating temperature of the ion-sensitive glass electrode. Hence, there is a unitary stress condition maintained in the ion-sensitive glass membrane or ion-sensitive glass layer. Ambiguous stress conditions, which could harm the glass matrix, with changes between tensile stress and compressive stress within regions of the ion-sensitive glass membrane or glass layer are avoided.

In contradiction to the teachings of the prior art, the object of the invention is not to avoid stress in the ion-sensitive glass electrode. In the contrary according to the invention the inventive ion-sensitive glass electrode in solid-state or non-solid-state embodiment is produced and/or assembled in such a way that stress, namely compressive stress is always present in the glass membrane, which in solid-state embodiments preferably is present as a glass layer in a layered structure. The desired stress state is preferably a biaxial stress or more specifically an equibiaxial stress. In this state every element of the ion-sensitive membrane is under the same pressure from all sides within a plane. Maintaining this state at least approximately preferably over the whole range or part of the range of the specified operating temperature of the ion-sensitive glass electrode has shown that cracks and fissures can be avoided. Exposing the ion-sensitive glass membrane to high changes of the operating temperature, which typically significantly reduces the lifespan of conventional ion-sensitive glass electrodes, has practically no impact on the lifespan of inventive ion-sensitive glass electrodes. Hence, by exposing inventive ion-sensitive glass membranes to stress, namely compressive stress, their integrity can be maintained over an extended lifespan.

Creating compressive stress within an ion-sensitive glass layer or glass membrane can be achieved in different ways. Compressive stress can be induced into the ion-sensitive glass membrane or glass layer e.g. by applying distributed forces across a practically linear, preferably annular, and/or planar connection, e.g. across a practically linear connection with an annular or tubular first holding member and/or across a planar connection with a second holding member in the embodiment of a substrate layer, which may exhibit the form of a disc. The ion-sensitive layer can be mounted under compressive stress or without mechanical stress at a suitable process temperature. In preferred embodiments discussed below, compressive stress in the ion-sensitive membrane is created by the connection to a mounting element, which after connection contracts by a desired extent, thereby exerting preferably radial forces onto the ion-sensitive glass layer, which is preferably a circular element, such as a disc. In the layered structure, materials with suitable thermal expansion coefficients are preferably selected for the dominant layers which under thermal treatment expand and after contraction pressurise the connected ion-sensitive glass layer. Alternatively or in addition materials with suitable thermal expansion coefficients are selected for the first and/or second or further holding member(s) and the ion-sensitive glass membrane which under thermal treatment expand and after contraction pressurise the connected ion-sensitive glass layer.

The materials are preferably selected such that the thermal expansion coefficient of the ion-sensitive glass layer is smaller than the thermal expansion coefficient of the substrate. The ion-sensitive glass layer and the substrate are then connected or deposited upon one another, with the electrically conducting layer and optionally at least one intermediate layer in between, under a process temperature above the maximum operating temperature of the measurement unit, which is typically at 150°C. Of course, not only finished layer units can be connected in this way, but layers can also be produced or built partially or completely by any thin-film or thick film technology at the selected process temperature.

After connecting the ion-sensitive glass layer and the substrate typically via the electrically conducting layer and the intermediate layer, if present, the process temperature is lowered and the ion-sensitive glass layer and substrate will contract accordingly. Due to the higher thermal expansion coefficient the substrate will contract stronger than the ion-sensitive glass layer and will exert corresponding forces or pressure onto the ion-sensitive glass layer. These contraction forces applied by the substrate are typically radially aligned and typically point to the centre of the ion-sensitive glass layer. Since the planar connection between the substrate and the ion-sensitive glass layer was established at the first process temperature, e.g. around 300°C, which is not reached by the temperature present during measurement processes, which will typically not exceed 150°C, the ion-sensitive membrane will always exhibit compressive stress regardless of the temperature currently present during measurement. The constantly pressurised glass layer is stabilised and will not exhibit cracks or fissures during thermal cycles or normal mechanical handling.

The connection of the holding member and the ion-sensitive glass membrane, which have different thermal expansion coefficients, is done analogously. Connection of a first loop-shaped or ring-shaped sealing surface of the holding member and a first loop-shaped or ring-shaped contact surface of the ion-sensitive glass layer is done at a process temperature above the maximum operating temperature of the measurement unit.

Process temperatures are always selected with regard to the materials used for the layered structure and the holding member. The differences of the thermal expansion coefficients and the related materials are selected according to the given requirements and the conditions of use of the ion-sensitive electrode. In order to maintain compressive stress in the ion-sensitive glass layer over the whole range of the operating temperature, i.e. the ion-sensitive membrane, the material of the ion-sensitive glass layer and the material of the substrate and and/or the material thermal expansion coefficient of the ion-sensitive glass layer and the material of the holding member are selected such that the related thermal expansion coefficients of the adjoining materials differ by a value preferably in the range from 1 % -12.5 %. Typically a value is selected in the range from 7.5 % -11.5 %. While it is desired to maintain the compressive stress in the ion-sensitive glass layer over the whole range of the operation temperature applied during measurement processes, significant reduction of undesirable stress in the ion-sensitive glass layer is also reached, if the range of the operation temperature is not fully covered. In the event that peak temperatures are seldom reached, such peak temperatures may be disregarded if other requirements need to be taken into account as well.

In a first embodiment a first holding member is an annular glass member or tubular glass member having an annular end face, which is welded to the ion-sensitive glass membrane or which by means of bonding material is bonded to the ion-sensitive glass membrane.

In a second embodiment a second holding member is a substrate, preferably a disc - shaped substrate, and the ion-sensitive glass membrane is a glass layer, which directly or via at least one intermediate layer adheres to the substrate and wherein the ion-sensitive glass membrane, the at least one intermediate layer and the substrate form a layered structure. In a preferred embodiment, this layered structure forms together with a related holding member, e.g. an annular glass member, the measurement unit. Furthermore, an ion-sensitive glass electrode, which comprises the layered structure or the measurement unit, is a solid-state ion-sensitive glass electrode.

A first intermediate layer of the layered structure is preferably an electrically conducting layer. In a further preferred embodiment a first intermediate layer is an electrically conducting layer directly adjoining the substrate and a second intermediate layer is a solid-state electrolyte layer that adjoins on one side the electrically conducting layer and on the other side the ion-sensitive glass membrane.

In a preferred embodiment the holding member is made of ceramic or glass. The solid-state measurement unit can therefore be integrated into any structure of any ion-sensitive electrode. Furthermore, the applied technology allows the solid-state measurement unit to be designed practically with any desired dimensions. Due to the rigidity and improved encapsulation, the solid-state measurement unit can be applied in any processes, such as industrial processes with high demand.

The substrate is preferably made of or comprises at least one of the following materials: metal, steel, ceramic, glass, glass ceramic, polymer compound, fibre composite material. The substrate is preferably disk shaped. Further, the substrate has a thickness preferably in the range of 0.2 mm - 1.5 mm, selected according to the mechanical stability required.

The electrically conducting layer preferably comprises or consists of a metal or metal alloy, preferably of an alkali metal such as lithium or a lithium alloy, with a reduction potential of at least 1.0 V. The substrate and the electrically conducting layer may be a unitary part with homogeneous material over the whole cross-section. The electrically conducting layer may also be an integral part the substrate, which one side exhibits specific metallic properties and maybe coated for example by a film of metal, preferably alkali metal or an alloy comprising alkali metal.

The solid-state electrolyte layer, if present, is preferably made of a solid-state electrolyte that preferably conducts ions released from the electrically conducting layer. If the electrically conducting layer comprises or consists of lithium or a lithium alloy then the solid-state electrolyte layer would transfer lithium ions. The solid-state electrolyte separates the electrically conducting layer made of lithium or a lithium alloy from the ion-sensitive glass layer or glass membrane so that a reduction of the glass matrix is avoided.

The ion-sensitive glass layer is made of a glass that preferably conducts ions of the electrically conducting layer. If the electrically conducting layer comprises or consists of lithium or a lithium alloy then the ion-sensitive glass layer would transfer lithium ions.

Inventive ion-sensitive sensitive glass electrodes may be assembled in various ways. In the embodiment of a solid-state glass electrode the ion-sensitive glass membrane is preferably provided with a first ring-shaped contact surface and the substrate is provided with a second ring-shaped contact surface. The annular or tubular glass member is provided with a first ring-shaped sealing surface sealingly connected to the first ring-shaped contact surface of the ion-sensitive glass membrane and is provided with a second ring-shaped sealing surface connected to the second ring-shaped contact surface of the substrate. After connecting said contact surfaces and sealing surfaces, the first and second ring-shaped contact surfaces of the layered structure are sealingly connected by an annular section of the annular or tubular glass member. The first and second contact surface and the first and second sealing surface are ring-shaped or loop-shaped and form closed loops with any suitable form, preferably a circular, rectangular, oval or any other curved form.

In a preferred embodiment, the first and second ring-shaped sealing surfaces and/or the first and second ring-shaped contact surfaces form circular closed loops and/or are arranged concentrically or offset from one another. Arranging the ring-shaped sealing surfaces and the ring-shaped contact surfaces in closed loops ensures perfect sealing.

In a further preferred embodiment, the preferably disc shaped substrate has an upper side facing a lower side of the holding member. With its lower side the substrate faces the electrically conducting layer, if present, the solid-state electrolyte layer and the upper side of the ion-sensitive glass layer. The ion-sensitive glass layer faces with its lower side the measured solution.

The holding member is sealingly connected in two separate contact regions to the substrate, in a first region to the ion-sensitive glass layer and in a second region to the substrate. The layers of the layered structure are therefore hermetically sealed thus inhibiting access of ambient chemical reactants such as $O_2$, $H_2O$, $N_2$, $CO_2$, etc. to the contact regions of the layers of the layered structure, particularly to the sensitive electrically conducting layer and any intermediate layer.

Hence, hermetically sealing the layered structure allows using materials that otherwise may easily get destroyed by exposure to ambient chemical reactants. Furthermore, since the electrically conducting layer and, if present, the solid-state electrolyte layer are perfectly protected, these layers can be applied with a minimum thickness preferably in the range from 10 nm to 10 $\mu$m by any deposition process, such as PVD and/or electroplating on the substrate or possibly the glass layer that are serving as a carrier for the deposited material.

In a preferred embodiment, the first and second ring-shaped sealing surfaces and/or the first and second ring-shaped contact surfaces form circular closed loops and/or are arranged concentrically or offset from one another. Arranging the ring-shaped sealing surfaces and the ring-shaped contact surfaces in closed loops ensures perfect sealing.

The layered structure is preferably provided with a first stepped profile with the ion-sensitive glass layer having a diameter that is larger than the diameter of the substrate and preferably the adjoining electrically conducting layer, and if present the solid-state electrolyte layer. The first stepped profile of the layered structure complements a second stepped profile provided at the lower side of the holding member. Using first and second stepped profiles that are complementing one another has different advantages. Arranging the connections between the holding member and the ion-sensitive glass layer and the holding member and the substrate on different levels ensures good separation between these connections. Further, mechanical engagement between the stepped profiles increases mechanical stability. Still further, using stepped profiles avoids the requirement of a larger displacement of the connecting zones relative to the central axis of the measurement unit, which therefore can be manufactured with smaller dimensions.

Further, particularly with the stepped profiles, the first ring-shaped contact surface can be located on the upper side of the ion-sensitive glass layer and the second ring-shaped contact surface can be located on the upper side of the substrate. This arrangement facilitates assembly and manufacturing processes particularly the position processes, mounting processes as well as fusing or melting processes.

The first ring-shaped sealing surface of the holding member is preferably arranged in a first plane and the second ring-shaped sealing surface of the holding member is arranged in a second plane, which first and second planes are aligned in parallel to the substrate preferably with a distance between one another that corresponds at least approximately to the thickness of the substrate plus the thickness of the electrical conducting layer and, if present, the solid-state electrolyte layer. The planar arrangement of the layers and sealing and contact surfaces further facilitates manufacturing processes.

The measurement unit, which is provided for an ion-sensitive solid-state electrode, such as a pH-electrode, that serves for measuring an ion activity in a measured solution, comprises a layered solid-state structure with an ion-sensitive glass layer that is provided with a first ring-shaped contact surface and that directly or via solid-state electrolyte layer adheres to an electrically conducting layer, which adheres to a substrate that is provided with a second ring-shaped contact surface and with a holding member that is provided with a first ring-shaped sealing surface sealingly connected to the first ring-shaped contact surface of the ion-sensitive glass layer and that is provided with a second ring-shaped sealing surface connected to the second ring-shaped contact surface of the substrate; and wherein the first and second ring-shaped sealing surfaces of the holding member are sealingly connected by an annular section of the holding member.

Various processes and materials can be used for bonding the first ring-shaped sealing surface and the first ring-shaped contact surface of the ion-sensitive glass layer as well as the second ring-shaped sealing surface and the second ring-shaped contact surface of the substrate with one another.

Bonding may be accomplished by diffusion of the adjoining ring-shaped sealing and contact surfaces. Preferably the ring-shaped sealing and contact surfaces are arranged on material that is suitable for diffusion bonding under a suitable process temperature.

A bonding connection may use glass bonding material that is arranged, melted and solidified between the adjoining ring-shaped sealing and contact surfaces. The applied glass bonding material preferably diffuses into the ring-shaped sealing and contact surfaces, thus establishing a unitary bridge between the ring-shaped sealing and contact surfaces. The glass bonding material is preferably a sealing glass paste that may be dispensed or screen printed onto the ring-shaped sealing surfaces and/or the ring-shaped contact surfaces and that is then sealed to or fused with the adjoining sealing and contact surfaces by applying at least one thermal cycle with which the glass bonding material and/or the adjoining materials are heated to the sealing temperature.

A bonding connection may also consist of metal bonding material that is arranged, melted and solidified between the adjoining ring-shaped sealing and contact surfaces.

Preferably, bonding is established by creating several layers, optionally including an adhesion layer, for example comprising or consisting of Ti, Cr or TiW, with a thickness in the range of 10 nm to 500 nm, that is used to establish adhesion with the corresponding ring-shaped sealing or contact surface. Optionally a stress relief layer is provided for example comprising or consisting of Cu, with a thickness in the range of 100 nm to 2000 nm, serving for absorbing compressive or tensile stress occurring within the layered structure. Preferably, a wetting/barrier layer for example comprising or consisting of nickel (Ni), nickel-vanadium (NiV), nickel-phoshor (NiP), with a thickness in the range of 100 nm to 5000 nm and/or an oxidation protection layer for example comprising or consisting of gold (Au), with a thickness in the range of 10 nm to 200 nm are provided in addition. Optionally a solder layer for example comprising or consisting of tin (Sn), tin-silver (SnAg), tin-gold (SnAu), indium (In) based alloy or any other suitable soldering alloy, is plated on top. Soldering layer materials are selected that have an acceptable processing temperature so that layers or material of the layered structure are not impaired or overheated during bonding processes.

In further preferred embodiments, bonding material is deposited in form of preforms, such as a first annular sealing preform placed between the first ring-shaped sealing surface and the first contact surface, as well as a second annular sealing preform placed between the second ring-shaped sealing surface and the second contact surface. The preforms made of glass or metal are then melted and solidified. Such preforms may comprise or consist of a single material but may also comprise a plurality of materials or an alloy. Furthermore, a preform may consist of a single layer or a plurality of layers, such as at least one adhesion layer and/or at least one stress relief layer and/or at least one wetting/barrier layer and/or at least one oxidation protection layer and/or at least one solder layer. The above layers can be selected and combined according to the specific requirements.

As mentioned, process temperatures Tp applied to the layers of the layered structure are selected above the maximum operating temperature $T_{Omax}$ of the measurement unit. Preferably, the process temperature $T_P$ is by a factor k higher than the maximum operating temperature $T_{Omax}$ of the measurement unit; which factor $k = T_P/T_{Omax}$ is preferably in the range of 1.1 to 2.0 or more. For tin solder the ratio would typically be in the range of 1.1 to 1.3. For a glass frit the ratio would typically be in the range of 1.4 to 1.5.

The inventive measurement unit preferably comprises an electrical module, such as a firm or flexible PCB that may be used to collect, distribute and/or process information or signals. The electric module may comprise a processing unit and interfaces, with which electrical devices can be controlled or signals, e.g. received from a connected sensor can be processed. Preferably, the electrical module is connected to a thermal sensor. The electrical module is placed on the upper side of the substrate and preferably connected by reflow soldering. For this purpose, the upper side of the substrate, e.g. a metal disc, is provided with a solderable layer, e.g. a Ni/Au layer.

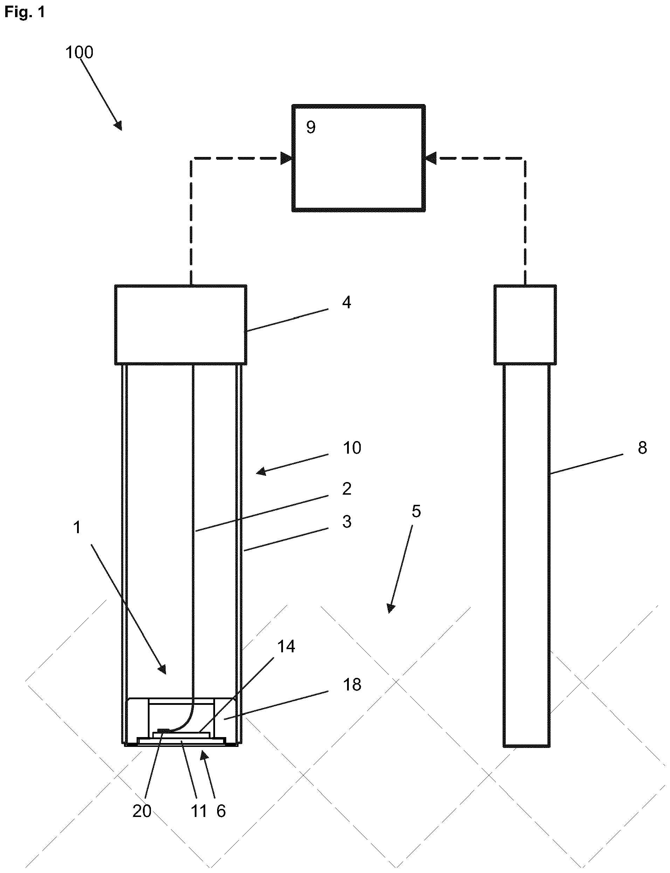

The holding member preferably encloses a cavity or hollow. As described above, at the lower side, the holding member exhibits a stepped profile that is arranged in a circle, ensuring that the layered structure is completely surrounded and hermetically sealed. Through the cavity, the electrical module is preferably accessible. Furthermore, a lead-off wire connected to the electrical module or to the layered structure, preferably the electrically conducting layer, and optionally other wires can pass through. After assembly, the hollow is filled and sealed with a moulding compound, such as an epoxy compound, which covers the upper side of the substrate and, if present the electrical module. The moulding compound preferably laterally adjoins the sealingly connected second ring-shaped sealing surface and the second contact surface, which are fused to one another, so that a dual stage sealing results. The holding member may be a long tube or a relatively small hollow cylindrical part, which can be mounted within a tube of an ion-sensitive electrode. In other words, in a first embodiment the holding member may be a main part of the ion-sensitive electrode, which needs to be closed by a cap only. In a second embodiment the holding member is held at the front side of the main part of the ion-sensitive electrode (see Fig. 1 below).

The technical solution, as well as other beneficial advantages, of the present invention will be apparent from the following detailed description of an embodiment of the present invention, with reference to the attached drawing.

In the drawings

Fig. 1    shows an inventive solid-state ion-sensitive electrode 10 equipped with an inventive solid-state measurement unit 1 and a reference electrode 8 immersed in a measured solution 5, with the measurement unit 1 comprising a layered structure 6 with an ion-sensitive glass layer 11 held under compressive stress by a substrate 14 attached to the ion-sensitive glass layer 11 and/or by an annular holding member 18 peripherally connected to the ion-sensitive glass layer 11;

Fig. 2    shows in a sectional view the solid-state measurement unit 1 of Fig. 1 held above the measured solution 5, with a layered structure 6 that is connected to a holding member 18 and that comprises an ion-sensitive glass layer 11 connected via an intermediate layer 12 to an electrically conducting layer 13, which adheres to a substrate 14;

Fig. 3    shows the measurement unit 1 of Fig. 2 in exploded view;

Fig. 4a   shows the ion-sensitive glass layer 11 and the holding member 18 of the measurement unit 1 of Fig. 2 before connecting to one another optionally by means of an annular preform 151;

Fig. 4b   shows the expanded ion-sensitive glass layer 11 and the expanded holding member 18 of Fig. 4a while being connected to one another at a process temperature well above the maximum operating temperature of the measurement unit 1;

Fig. 4c   shows the contracted ion-sensitive glass layer 11 and the contracted holding member 18 of Fig. 4b connected to one another, e.g. by means of an annular preform 151, at room temperature with a pressure with radially acting forces applied by the holding member 18 onto the ion-sensitive glass layer 11;

Fig. 5a   shows the ion-sensitive glass layer 11 and the substrate 14 of the measurement unit 1 of Fig. 2 with an optionally separated electrically conducting layer 13 and at least one optional intermediate layer 12 before being connected to one another;

Fig. 5b   shows the expanded ion-sensitive glass layer 11 and the expanded substrate 14 of Fig. 5a with the electrically conducting layer 13 and the at least one optional intermediate layer 12 attached ion-sensitive glass layer 11, while being connected to one another at a process temperature well above the maximum operating temperature of the measurement unit 1;

Fig. 5c   shows the contracted ion-sensitive glass layer 11 and the contracted substrate 14 with the electrically conducting layer 13 and the at least one optional intermediate layer 12 of Fig. 5b connected to one another at room temperature with a pressure with radially acting forces applied by the substrate 14 onto the ion-sensitive glass layer 11;

Fig. 6    shows the expanded layered structure 6 of Fig. 5c and the expanded holding member 18 together with two sealing preforms 151, 152, while being connected to one another at a process temperature well above the maximum operating temperature of the measurement unit 1; and

Fig.7a    symbolically shows elements of a conventional ion-sensitive glass electrode, namely a tubular holding member 18' made of a material having a higher thermal expansion coefficient $\alpha_{18}$ and a spherical ion-sensitive glass membrane 11 having a lower thermal expansion coefficient $\alpha_{11}$;

Fig.7b    shows the tubular holding member 18' and the curved ion-sensitive glass membrane 11 of Fig. 7a both expanded at a first process temperature; and

Fig.7c    shows an inventive non-solid-state ion-sensitive glass electrode 10 after assembly with the tubular holding member 18' and the curved ion-sensitive glass membrane 11 of Fig. 7b connected to one another with compressive stress remaining in the ion-sensitive glass membrane 11.

Fig. 1 shows an inventive solid-state ion-sensitive electrode 10 equipped with an inventive solid-state measurement unit 1 that comprises a layered structure 6 with an ion-sensitive glass layer 11 held under compressive stress by a substrate 14 attached to the ion-sensitive glass layer 11 and/or by an annular holding member 18 peripherally connected to the ion-sensitive glass layer 11.

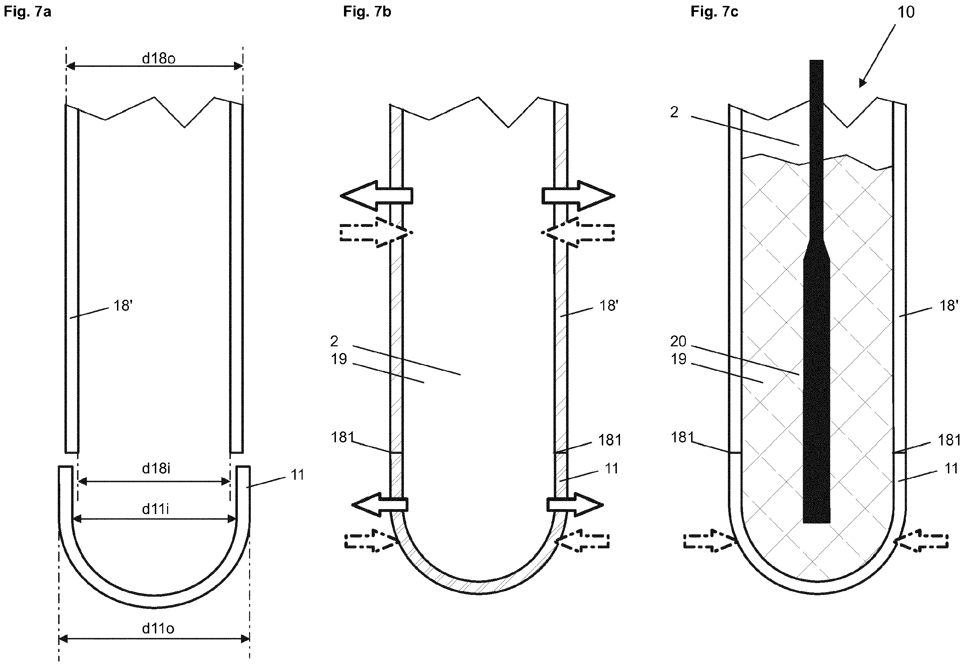

Fig.7c shows an inventive non-solid-state ion-sensitive glass electrode 10 in a conventional design with a tubular holding member 18' holding a curved ion-sensitive glass membrane 11 under compressive stress remaining.

Hence, the inventive solution can be used for solid-state and non-solid-state ion-sensitive glass electrodes, which essentially comprise an ion-sensitive glass membrane 11 or an ion-sensitive glass layer 11. Below, first the structure and assembly processes of the inventive solid-state ion-sensitive electrode 10 of Fig. 1 and then the structure and assembly processes of the non-solid-state ion-sensitive glass electrode 10 of Fig. 7c or explained in detail.

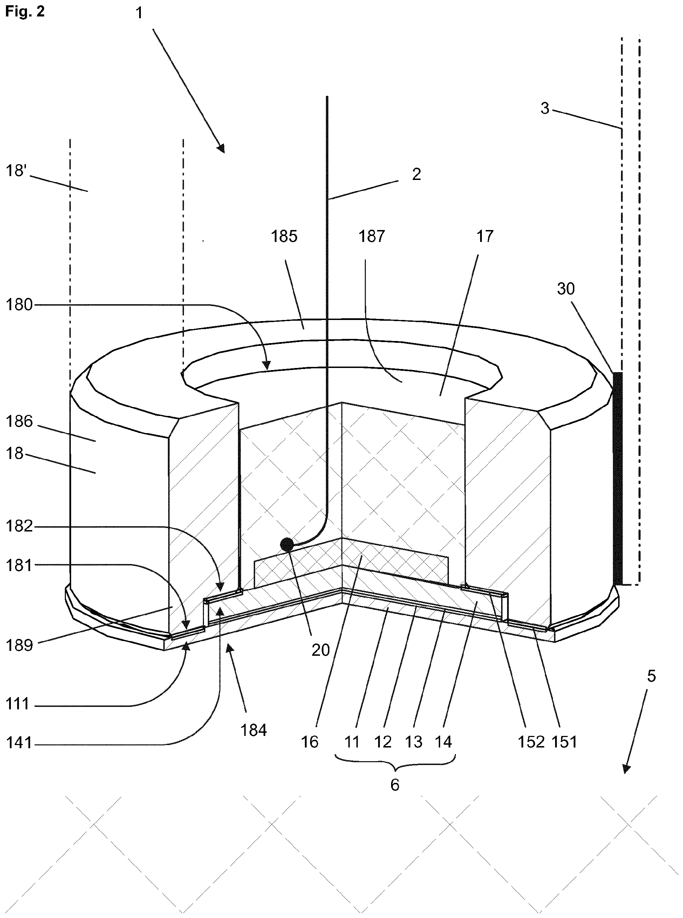

Fig. 1 shows schematically a measurement system 100 with an inventive ion-sensitive solid-state electrode 10, e.g. a pH-electrode, equipped with an inventive solid-state measurement unit 1 and a reference electrode 8 immersed in a measured solution 5. The ion-sensitive electrode 10 comprises an electrode head 4, which preferably encloses at least part of a required measurement circuit that is connected to a first signal input port of a control unit 9, possibly a so-called transmitter, which comprises a second signal input port, to which the reference electrode 8 is connected. Connection of the ion-sensitive electrode 10 and the reference electrode 8 to the control unit 9, which may comprise a display unit, is established by wire or wireless, e.g. inductively or by means of a wireless network. The electrode head 4 of the ion-sensitive electrode 10 is connected to the upper end of a tubular electrode body 3, which at the lower end is connected to the inventive measurement unit 1. The measurement unit 1 comprises a layered structure 6 with an ion-sensitive glass layer 11 exposed to the measured solution 5. On the side facing the electrode head 4, the measurement unit 1 is provided with an electrical contact 20, possibly provided on an electrical module 16, such as a printed circuit board, (see Fig. 2). The electrical contact 20 is connected to a lead-off wire 2, which connects the measurement module 1 to the electrode head 4. Circuitry for processing the measured signal may be provided in the electrical module 16 and/or in the electrode head 4 and/or or in an external device.

Fig. 2 schematically shows in a sectional view the solid-state measurement unit 1 of Fig. 1 held above the measured solution 5, with a layered structure 6 that is connected to a holding member 18 and that comprises an ion-sensitive glass layer 11 connected via a solid-state electrolyte layer 12 to an electrically conducting layer 13, which it adheres to a substrate 14. The ion-sensitive glass layer 11 is held under constant compressive stress, acting inward with distributed forces, preferably over the whole range of the specified operating temperature of the solid-state measurement unit 1 or the ion-sensitive electrode 10. Preferred steps for reaching the desired state of the ion-sensitive glass layer 11 are described below.

In the embodiment of a pH-electrode, the ion-sensitive glass layer 11 may be provided with a known pH-sensitive glass composition that is also used for glass membranes of conventional non-solid-state pH-electrodes. The ion-sensitive glass layer 11 is preferably provided in the embodiment of a glass wafer, which preferably exhibits a thickness in the range between 0.05 mm and 1 mm or higher. In a preferred embodiment the ion-sensitive glass layer 11 is deposited by a known thin-film technology, e.g. by sputtering, onto the intermediate layer 12 or onto the electrically conducting layer 13 or directly onto the metal substrate 14, in which the electrically conducting layer 13 maybe integrated. However, since only a thin electrically conducting layer 13 is required, this electrically conducting layer 13 is preferably applied to the substrate 14 by thick-film or thin-film technology as well. The solid-state electrolyte layer 12, if present, is preferably applied by thick-film or thin-film technology to the electrically conducting layer 13 or to the substrate 14, if the electrically conducting layer 13 is an integral part of the substrate 14. The sequence of building up the layers 11, 12, 13, 14 may also be reversed. It is also possible to connect any two layers 11, 12 or 12, 13 or 13, 14 in pairs that are further connected. E.g., the layers 12 and 13 may be connected independently and then connected to layer 11 or 14. The solid-state electrolyte layer 12 may be applied to the ion-sensitive glass membrane 11 or to the electrically conducting layer 13.

In a preferred embodiment, the holding member 18, which preferably exhibits a maximum electrical resistance, is made of ceramic or glass. The substrate 14 preferably comprises at least one of the following materials, metal, steel, ceramic, glass, glass ceramic, polymer compound, fibre composite material. The electrically conducting layer 13 comprises a metal or metal alloy, preferably an alkali metal or a compound containing alkali metal, with a reduction potential of at least 1.0 V, such as lithium or a lithium alloy. The solid-state electrolyte layer 12, if present, is made of a solid-state electrolyte that preferably conducts ions of the electrically conducting layer 13, such as lithium ions. The ion-sensitive glass layer 11 is made of a glass that preferably conducts ions of the electrically conducting layer 13, such as lithium ions. Below described are preferred materials and processes for manufacturing the layered structure 6.

In a preferred embodiment, the electrically conducting layer 13 consists of lithium or a lithium alloy. The solid-state electrolyte layer 12, which may be applied to this electrically conducting layer 13 or to the ion-sensitive glass layer 11, is a solid-state electrolyte layer that is conducting lithium ions. The solid-state electrolyte layer may consist of or may comprise for example: lithiumborate, such as $B_2O_3$-$Li_2O$, lithium borat-sulphate (LiBSO), such as $B_2O_3 - 0.0Li_2O - 0.8Li_2SO_4$, lithium borophosphate (LiOP), such as $\frac{1}{2} x\ Li_2O\text{-}BPO_4,$ generally $Li_2O$ - $B_2O_3$ -$P_2O_5$, lithium-aluminate, such as $Li_5AlO_4$, lithium-borosilicate, such as $Li_2O$-$B_2O_3$-$SiO_2$, lithium-gallium ox-

ide, such as $Li_5GaO_4$, lithium-germanate, such as $Li Al_xGeO_4$, lithium-phosphate, such as $Li_{(1+x)}Ti_2Si_xP_{(3-x)}O_{12}$ or $Li_{(1+x)}M_xTi_{(2-x)}(PO_4)_3$ with M=Al, Ga, Fe, Sc, In, Lu, Y, La, lithium-phosphorus-oxynitride, such as $Li_3PO_{4-x}N_x$, lithium-silicate-aluminate, such as $LiAlSi_2O_6$, $LiAlSiO_4$, $Li_9SiAlO_8$, lithium-silicate, such as $Li_2SiO_4$, $Li_4SiO_4$, $Li_2SiO_3$, $Li_2Si_2O_5$, lithium-silicon Phosphate, such as $Li_{3.6}Si_{0.6}P_{0.4}O_4$, lithium-silicon-phosphorus-oxynitride, such as $Li_4SiO_{4-x}$-$Li_3PO_{4-y}N_{x+y}$, lithium-thiogermanate, $Li_2GeS_3$, $Li_4GeS_4$, $Li_6GeS_5$, lithium-titanate, such as $Li_2Zr_{(1-x)}Ti_xO_3$, lithium-vanadate, lithium-compounds, such as $Li_2S$-$SiS_2$-$Li_3PO_4$ or $Li_7P_3S_{11}$, lithium-zinc oxides, such as $Li_6ZnO_4$, lithium-boron-oxynitride (Li-B-O-N), such as $Li_{3.09}BO_{2.53}N_{0.52}$, sulphide, such as $Li_2S$ - $GeS_2$, and thio-lithium-germanium-compound, such as $Li_{10}GeP_2S_{12}$, $Li_{3.25}Ge_{0.25}P_{0.75}S_4$, or mixtures thereof.

In a preferred embodiment the solid-state electrolyte layer 12 comprises an alkali metal-solid-state electrolyte compound, particularly a lithium-phosphorus-oxynitride-compound (LiPON), which is applied for example by sputtering. Further, thin-film processes suitable for applying the solid-state electrolyte layer 12 are for example: pulsed laser deposition, magnetron sputtering, reactive magnetron sputtering, CVD, vapour deposition, reactive vapour deposition, procedures, und plasma assisted chemical vapour deposition, such as plasma assisted CVD or vacuum plasma spray coating. The solid-state electrolyte layer 12 preferably exhibits a layer thickness in the range from 50 nm to 5000 nm or higher. Most suitable are layer thicknesses in the range from 100 nm to 1000 nm.

Subsequently the electrically conducting layer 13, which comprises an alkali metal such as metallic lithium, i.e. pure lithium, an alloy comprising lithium-(O)- or a lithium-solid-state compound, is applied to the solid-state electrolyte layer 12. The layer thickness of the electrically conducting layer 13 is preferably in the range between 10 nm to 10 μm or higher.

As described above, the measurement principle of the inventive ion-sensitive electrode 10 and the solid-state measurement unit 1 is based on the ionic reaction between the measured solution 5 and the ion-sensitive glass layer 11. The ion conducting solid-state electrolyte layer 12 supports at the interface between the solid-state electrolyte layer 12 and the electrically conducting layer 13 a reversible redox reaction between ionic and metallic lithium, so that a measurement signal is provided at a suitable electrical contact, which is provided at the electrically conducting layer 13. Damage to the ion-sensitive glass layer 11, which is separated from the electrically conducting layer 13 by the solid-state electrolyte layer 12, is avoided.

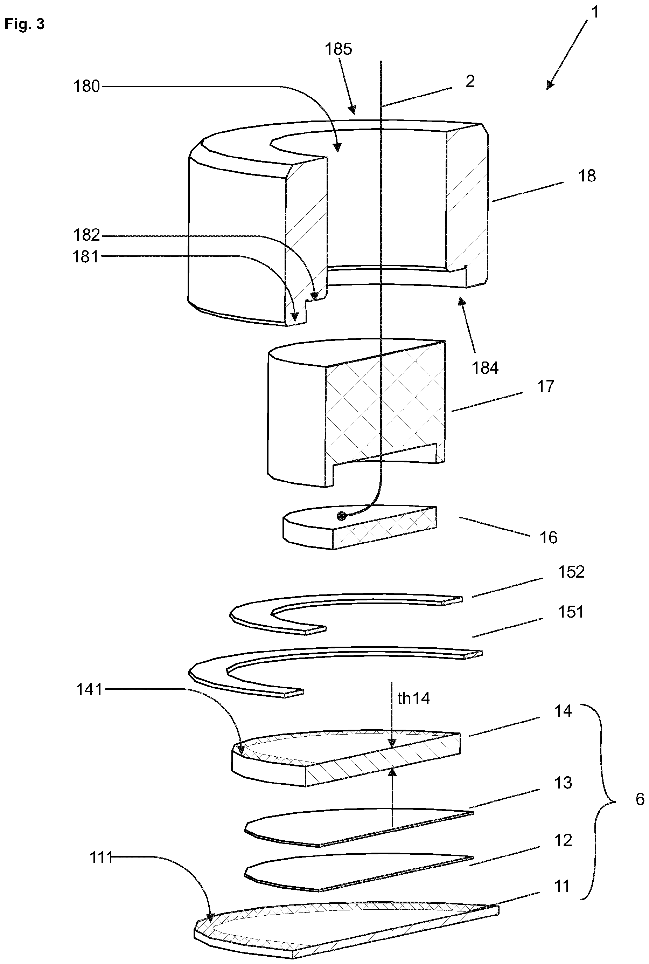

Since materials used for the layered structure 6, such as lithium for the electrically conducting later 13, is highly reactive to ambient chemical reactants such as $O_2$, $H_2O$, $N_2$, $CO_2$, etc., the measurement unit 1 is provided with a hermetic encapsulation, which prevents such chemical reactants from entering the measurement unit 1. At the same time it is important that direct electric contact as well as leakage currents are avoided. This is achieved with the encapsulation of the layered structure 6, which will be described with reference to Fig. 2 and to Fig. 3, which shows the measurement unit 1 in exploded view.

Fig. 2 shows that the ion-sensitive glass layer 11 of the layered structure 6 is provided with a first ring-shaped contact surface 111 and that the electrically conducting layer 13 is provided with a second ring-shaped contact surface 141. At its lower side 184 facing the layered structure 6, the holding member 18 is provided with a first ring-shaped sealing surface 181 that is sealingly connected to the first ring-shaped contact surface 111 of the ion-sensitive glass layer 11 and that is provided with a second ring-shaped sealing surface 182 connected to the second ring-shaped contact surface 141 of the substrate 14. The first ring-shaped sealing surface and the second ring-shaped sealing surface 182 of the holding member 18 are sealingly connected by an annular section 189 of the holding member 18.

The holding member 18 has an annular shape with a circular wall having an outer side 186 and an inner side 187 and has a stepped profile at the lower side 184, which is facing the layered structure 6. The annular section 189 is therefore an integral part of the circular wall of holding member 18. Due to the stepped profile the first and second sealing surfaces 181 and 182 are laterally adjoining one another and are vertically displaced from one another. The measurement unit 1 can therefore be built in small dimensions.

Due to the hollow cylindrical shape of the holding member 18, the first and second ring-shaped sealing surfaces 181, 182 and the thereto corresponding first and second ring-shaped contact surfaces 111, 141 of the ion-sensitive glass layer 11 and the substrate 14 form circular closed loops that are arranged concentrically to one another.

Further, the disc shaped substrate 14 has an upper side facing the lower side 184 of the holding member 18 and a lower side facing the upper sides of the electrically conducting layer 13, the upper side if present, of the solid-state electrolyte layer 12, and the upper side of the ion-sensitive glass layer 11, which faces with its lower side the measured solution 5. The first ring-shaped contact surface 111 is located on the upper side of the ion-sensitive glass layer 11 and the second ring-shaped contact surface 141 is located on the upper side of the substrate 14. Both ring-shaped contact surfaces 111, 141 are provided on the upper side of the layered structure 6 and can therefore easily be connected to the first and second sealing surfaces 181 and 182 of the holding member 18.

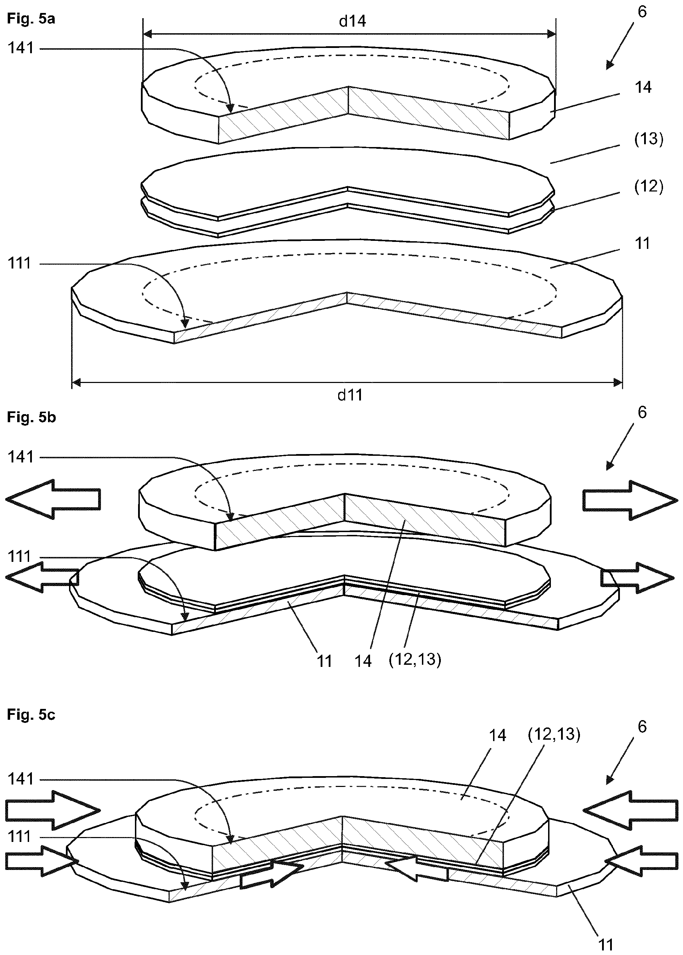

The stepped profile provided at the lower side 184 of the holding member 18 corresponds to a stepped profile of the layered structure 6 with the preferably circular ion-sensitive glass layer 11 having a diameter d11 that is larger than the diameter d14 of the preferably circular substrate 14 (see Fig. 5a). The stepped profile of the layered structure 6 and the stepped profile at the lower side of the holding member 18 therefore complement one another and provide mechanical stability to the individual layers 11, 12, 13.

The first ring-shaped sealing surface 181 of the holding member 18 is arranged in a first plane and the second ring-shaped sealing surface 182 of the holding member 18 is arranged in a second plane, which planes are aligned in parallel to the substrate 14 with a distance between one another that corresponds to the thickness th14 of the substrate 14 plus the thickness of the solid-state electrolyte layer 12 and the electrically conducting layer 13.

In the embodiment of Fig. 2 and Fig. 3 the holding member 18 and the layered structure 6 are connected with one another by means of a first annular sealing preform 151 placed between the first ring-shaped sealing surface 181 of the holding member 18 and the first ring-shaped contact surface 111 of the ion-sensitive glass layer 11 as well as a second sealing preform 152 placed between the second ring-shaped sealing surface 182 of the holding member 18 and the second ring-shaped contact surface 141 of the substrate 14. By thermal treatment, the annular sealing preforms 151, 152 have been melted and solidified. During the melting process, the material of the sealing preforms 151, 152 is diffusing into the neighbouring surfaces 181, 111; 182, 141 and establishes contact bridges of preferably unified material so that the layered structure 6 gets hermetically closed and encapsulated. The ion-sensitive glass layer 11, the holding member 18 and the substrate 14 form practically a unity that are hermetically enclosing the electrically conductive layer 13 and, if present, the intermediate layer 12. The annular connecting bridge between the ion-sensitive glass layer 11 and the substrate 14, which includes the melted sealing preforms 151, 152 and the holding member 18, has a very high electrical resistance and therefore suppresses any leakage current.

As described above, connections between the layered structure 6 and the holding member 18 can be established in other ways, e.g. by melting and diffusing material of the adjoining ring-shaped sealing and contact surfaces 181, 111; 182, 141. Glass bonding material, e.g. a glass powder or glass paste, can also be arranged, melted and solidified between the adjoining ring-shaped sealing and ring-shaped contact surfaces 181, 111; 182, 141. Bonding material can also be deposited with any deposition process, e.g. by thick film technology and/or thin-film technology. For bonding purposes glass bonding material, e.g. glass powder, can be used. Such bonding material can be structured in several layers as described above.

Fig. 2 further shows that an electrical module 16 is placed on the upper side of the substrate 14. This electrical module 16 can contain measurement circuitry and can be connected to at least one sensor, e.g. a thermal sensor.

Still further, Fig. 2 shows that the holding member 18 has a tubular or annular form with a cavity 180 that is filled and sealed with a moulding compound 17, such as an epoxy compound, which covers the upper side of the substrate 14 and the electrical module 16 and laterally adjoins the sealingly connected second ring-shaped sealing surface 182 and second contact surface 141.

A lead-off wire 2 is connected to an electrical contact 20, which is connected to the electrically conducting layer 13 or to the electrical module 16.

Fig. 2 symbolically shows that the solid-state measuring unit 1, i.e. the holding member 18 is connected by means of an adhesive 30 to the lower end of the electrode body 3. As illustrated with dashed lines, in preferred embodiments, the holding member 18 could be an integral part of an electrode body 3' and could be a glass tube as used with conventional ion-sensitive electrodes, such as conventional pH-electrodes.

It has been described above that in preferred embodiments the ion-sensitive glass layer 11 is held under constant compressive stress, acting inward with distributed forces, preferably over the whole range of the specified operating temperature of the solid-state measurement unit 1 or the ion-sensitive electrode 10. Preferred steps for reaching the desired state of the ion-sensitive glass layer 11 are described below.

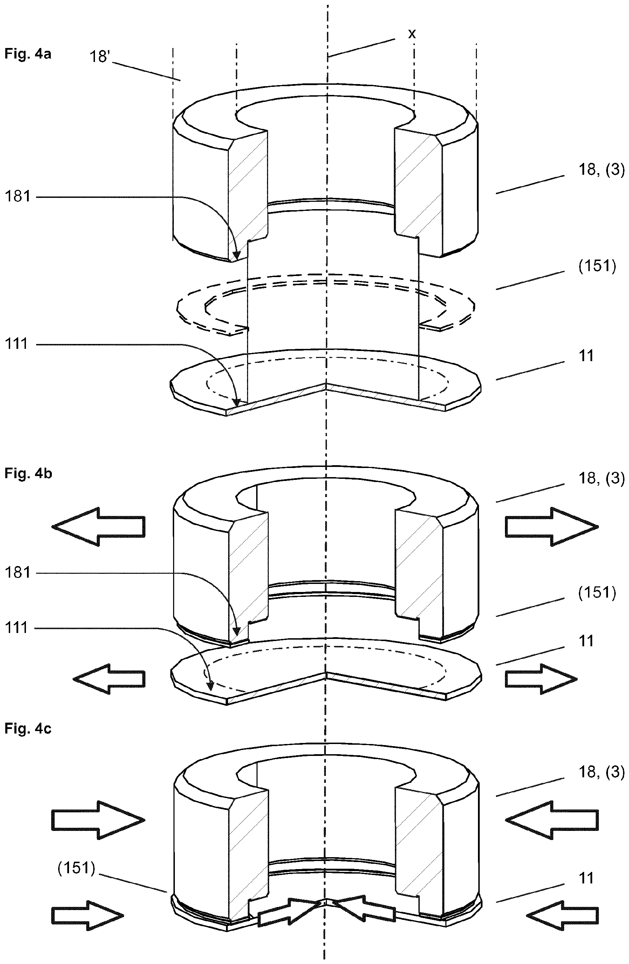

Fig. 4a shows the ion-sensitive glass layer 11 and the holding member 18 of the measurement unit 1 of Fig. 2 before connecting to one another for example by means of an annular preform 151 shown in dashed lines. The ion-sensitive glass layer 11 is shown without the other layers 12, 13, 14 of the layered structure 6, indicating that pressurising an ion-sensitive glass layer 11 can advantageously be done also without such a layered structure 6 and therefore also in non-solid-state ion-sensitive electrodes. Consequently, the holding member 18 can be an integral part of an electrode body 3' of an ion-sensitive non-solid-state electrode and the ion-sensitive glass layer 11 can be a conventional ion-sensitive glass membrane 11. I.e., the holding member 18 can be a glass tube connected to an ion-sensitive glass membrane 11 of a conventional ion-sensitive electrode, particularly a pH-electrode, as described above with reference to "A guide to pH-measurement", 03/2016, Mettler-Toledo GmbH. For the sake of simplicity, below always the term ion-sensitive glass layer is used, although such ion-sensitive glass layer can be a conventional ion-sensitive glass membrane.

In a preferred embodiment, in order to obtain an ion-sensitive electrode with a constantly pressurised ion-sensitive glass layer, the thermal expansion coefficients of the connected materials are selected as follows. The thermal expansion coefficient $\alpha_{11}$ of the ion-sensitive glass layer 11 is smaller than the thermal expansion coefficient $\alpha_{18}$ of the holding member 18.

As symbolically shown in Fig. 4b with arrows of different size, when heating the materials to a first process temperature the expansion of the holding member 18 will be greater than the expansion of the ion-sensitive glass layer 11. The holding member 18 and the ion-sensitive glass layer 11 are connected in this state, e.g. by melting the adjoining materials or by melting the first annular sealing preform 151 or other connecting material that has been provided between the first sealing surface 181 of the holding member 18 and the first contact surface 111 of the ion-sensitive glass layer 11. In Fig. 4b it is shown that the first annular sealing preform 151 or a functionally equivalent adhesive has been applied to the first sealing surface 181 of the holding member 18 and the ion-sensitive glass layer 11 is now connected thereto at the first process temperature. After connecting the ion-sensitive glass layer 11 to the holding member 18, the resulting structure is cooled down to room temperature. During this process, the ion-sensitive glass layer 11 and the holding member 18 contract according to their thermal expansion coefficients $\alpha_{11}$, $\alpha_{18}$ with the result that the contracted holding member 18 exerts a pressure with forces radially acting onto the ion-sensitive glass layer 11.

Fig. 4c shows the contracted ion-sensitive glass layer 11 and the contracted holding member 18 of Fig. 4b connected to one another at room temperature with the constant pressure applied by the holding member 18 onto the ion-sensitive glass layer 11. During the use of the conventional or solid-state ion-sensitive glass electrode 10 cracks and fissures are avoided, which in conventional electrodes often appear.

In solid-state embodiments of the ion-sensitive glass electrodes 10, i.e. in the inventive measurement unit 1, a pressurised ion-sensitive glass layer 11 is preferably reached by suitably selecting the thermal expansion coefficients of the layers 11, 12, 13, 14 of the layered structure 6.

Fig. 5a shows in sectional view the ion-sensitive glass layer 11 and the substrate 18 of the measurement unit 1 of Fig. 2 with an optionally separated electrically conducting layer 13 and an optional intermediate layer 12 before connecting to one another. The thermal expansion coefficient $\alpha_{11}$ of the ion-sensitive glass layer 11 is smaller than the thermal expansion coefficient $\alpha_{14}$ of the substrate 14. The thermal expansion coefficients $\alpha_{12}$ of $\alpha_{13}$ of the intermediate layer 12 and the electrically conducting layer 13 preferably corresponds to the thermal expansion coefficient $\alpha_{14}$ of the substrate 14. However, they could also be selected according to the thermal expansion coefficient $\alpha_{11}$ of the ion-sensitive glass layer 11 or in the range between the thermal expansion coefficient $\alpha_{11}$ of the ion-sensitive glass layer 11 and the thermal expansion coefficient $\alpha_{14}$ of the substrate 14. The ion-sensitive glass layer 11 and the substrate 14 are connected or deposited upon one another under a second process temperature above the maximum operating temperature of the measurement unit 1. The second process temperature may be stepped and cycled as required. Thermal energy is applied in accordance with the assembly process and under consideration of the used materials. First, the layered structure 6 is assembled and then the holding member 18 is added in a further process cycle.

Fig. 5b shows the expanded ion-sensitive glass layer 11 and the expanded substrate 14 of Fig. 5a with the electrically conducting layer 13 and the at least one optional intermediate layer 12 attached to the ion-sensitive glass layer 11, while being connected at the second process temperature. In a preferred embodiment, a first part of the electrically conducting layer 13 is applied to the substrate 14 and a second part of the electrically conducting layer 13 is applied to the solid-state electrolyte layer 12. Then the layered structure 6 is assembled and hot pressed, e.g. at about 250°C, so that a diffusion bond is established between the first and second part of the electrically conducting layer 13.

Fig. 5c shows the contracted ion-sensitive glass layer 11 and the contracted substrate 14 with the electrically conducting layer 13 and the at least one optional intermediate layer 12 of Fig. 5b connected to one another at room. As symbolically shown with arrows pointing to the centre of the ion-sensitive glass layer 11, the ion-sensitive glass layer 11 remains under constant compressive stress when used within the specified range of the operating temperature, thus avoiding cracks and fissures.

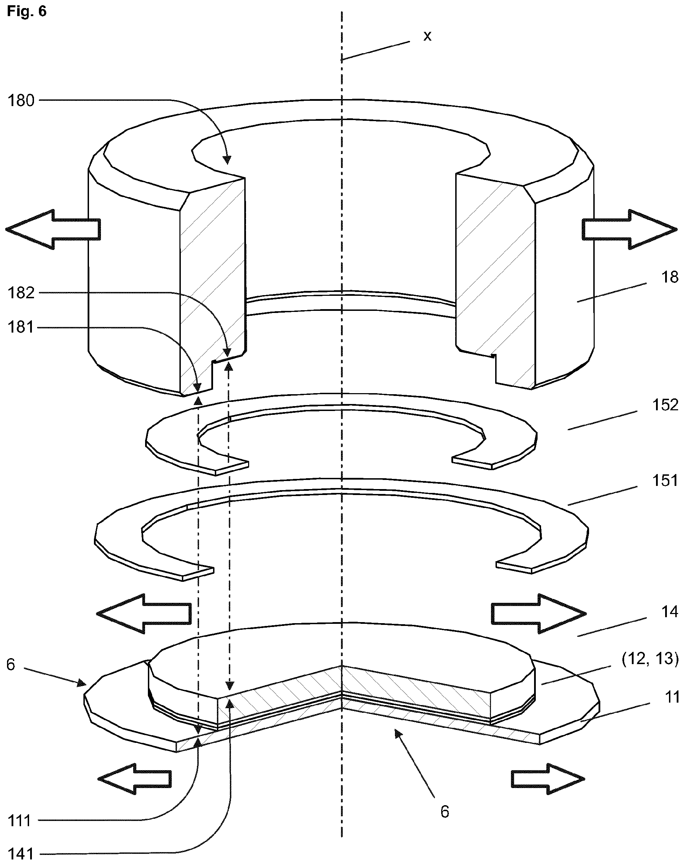

Fig. 6 shows the expanded layered structure 6 of Fig. 5c and the expanded holding member 18 together with two sealing preforms 151, 152, while being connected to one another at a process temperature, e.g. the mentioned first process temperature, well above the maximum operating temperature of the measurement unit 1. After connecting the holding member 18 to the layered structure 6, both the substrate 14 and the holding member 18 hold the ion-sensitive layer 11 under constant compressive stress over the whole range of the operating temperature of the measurement unit 1.

Fig. 7a symbolically shows elements of an inventive ion-sensitive glass electrode separated from one another, namely a tubular holding member 18' made of a material having a thermal expansion coefficient $\alpha_{18'}$ and a semi-spherical ion-sensitive glass membrane 11 having a thermal expansion coefficient $\alpha_{11}$. The thermal expansion coefficient $\alpha_{18'}$ of the tubular holding member 18', which has an inner diameter d18i and an outer diameter d18o is higher than the thermal expansion coefficient $\alpha_{11}$ of the ion-sensitive glass membrane 11, which has an inner diameter d11i and an outer diameter d11o. At room temperature the inner diameter d18i of the tubular holding member 18' it is slightly smaller than the inner diameter d11i of the ion-sensitive glass membrane 11.

As shown in Fig. 7b in order to connect the tubular holding member 18' and the ion-sensitive glass membrane 11 both are heated to a process temperature at which the inner diameters d18i and d11i up are at least approximately even. In this state the tubular holding member 18' and the ion-sensitive glass membrane 11 are welded, fused or bonded together. The glass bonding material is preferably a sealing glass paste or a glass layer. Subsequently the tubular holding member 18' and the thereto connected ion-sensitive glass membrane 11 are cooled down to room temperature. Since the contraction of the tubular holding member 18' is higher the one of the ion-sensitive glass membrane 11 compressive stress is introduced into the ion-sensitive glass membrane 11.

Fig.7c shows an inventive non-solid-state ion-sensitive glass electrode 10 after assembly with the tubular holding member 18' and the curved ion-sensitive glass membrane 11 of Fig. 7b connected to one another with compressive stress remaining in the ion-sensitive glass membrane 11. The inventive non-solid-state ion-sensitive glass electrode 10 has a conventional design as described in "A guide to pH-measurement", 03/2016, Mettler-Toledo GmbH, but has been provided with the inventive features. In the ion-sensitive glass electrode 10 an inner buffer 19 is provided, which contains a constant concentration of chloride that produces a constant potential at an Ag/AgCl electrode 20 that is immersed in the inner buffer 20 and that is connected to a lead-off wire 2. This electrochemical chain connects the potential of the ion-sensitive glass membrane 11 to the potential of the lead-off wire 2 leading out of the ion-sensitive electrode 10.

Connecting a tubular holding member 18' to an ion-sensitive glass membrane 11 with the described geometrical dimensions has the advantage of perfect alignment of the related end pieces, which preferably have identical wall thicknesses. However, since only small deviations between the geometrical dimensions of the tubular holding member 18' and the ion-sensitive glass membrane 11 are required to provide compressive stress within the ion-sensitive glass membrane 11, the inner diameters d18i and d11i can be approximately equivalent and the adaptation can be done by the welding or bonding material 181 which preferably connects the tubular holding member 18' to the ion-sensitive glass membrane 11.

## Reference signs list

| | |
|---|---|
| 1 | measurement unit |
| 2 | lead-off wire |
| 3 | auxiliary tube |
| 4 | electrode head |
| 5 | measured solution |
| 6 | layered structure |
| 8 | reference electrode |
| 9 | control unit |

| | |
|---|---|
| 10 | electrochemical sensor / pH-electrode |
| 11 | ion-sensitive membrane |
| 12 | solid-state electrolyte layer |
| 13 | electrically conducting layer |
| 14 | second holding member, substrate |
| 16 | electric module |
| 17 | moulding compound |
| 18 | first holding member, annular glass member |
| 18' | first holding member, tubular glass member |
| 18 | annular glass member |
| 19 | lead-off wire |
| 20 | Ag/AgCl electrode |
| 30 | adhesive |
| 100 | measurement system |
| 111 | first contact surface |
| 141 | second contact surface |
| 151 | first annular sealing preform |
| 152 | second annular sealing preform |
| 181 | welding or bonding connection |
| 182 | second sealing surface |
| 184 | lower side of the holding member 18 |
| 185 | upper side of the holding member 18 |
| 186 | outer side of the holding member 18 |
| 187 | inner side of the holding member 18 |
| 189 | annular section of the holding member 18 |

## Claims

1. Ion-sensitive glass electrode (10) that serves for measuring an ion activity in a measured solution (5) comprising an ion-sensitive glass membrane (11) and at least one holding member (14; 18; 18') that is connected to the ion-sensitive glass membrane (11) and that holds the ion-sensitive glass membrane (11) under compressive stress over the whole range or part of the range of the specified operating temperature of the ion-sensitive glass electrode (10).

2. Ion-sensitive glass electrode (10) according to claim 1, wherein a first holding member (18, 18') is an annular glass member (18) or tubular glass member (18') with an annular end face (181, 182), which is welded to the ion-sensitive glass membrane (11) or which by means of a bonding material (151, 152) is bonded to the ion-sensitive glass membrane (11).

3. Ion-sensitive glass electrode (10) according to claim 1 or 2, wherein a second holding member (14) is a substrate (14) and the ion-sensitive glass membrane (11) is a glass layer, which directly or via at least one intermediate layer (12; 13) adheres to the substrate (14) and wherein the ion-sensitive glass membrane (11), the at least one intermediate layer (12; 13) and the substrate (14) form a layered structure (6).

4. Ion-sensitive glass electrode (10) according to claim 3, wherein a first intermediate layer (13) is an electrically conducting layer (13) or wherein a first intermediate layer (13) is an electrically conducting layer (13) directly adjoining the substrate (14) and a second intermediate layer (12) is a solid-state electrolyte layer that adjoins on one side the electrically conducting layer (13) and on the other side the ion-sensitive glass membrane (11).

5. Ion-sensitive glass electrode (10) according to claim 3 or 4, wherein

- the annular or tubular member (18; 18') is made of glass;
- the substrate (14) comprises at least one of the following materials, metal, steel, ceramic, glass, glass ceramic, polymer compound, fibre composite material;
- the electrically conducting layer (13) comprises a metal or metal alloy with a reduction potential of at least 1.0 V such as lithium or a lithium alloy;
- the solid-state electrolyte layer (12), if present, is made of a solid-state electrolyte that preferably conducts ions of the electrically conducting layer (13), such as lithium ions, and
- the ion-sensitive glass membrane (11) is made of a glass that preferably conducts ions of the electrically conducting layer (13), such as lithium ions.

6. Ion-sensitive glass electrode (10) according to claim 3, 4 or 5, wherein the ion-sensitive glass membrane (11) is provided with a first ring-shaped contact surface (111) and the substrate (14) is provided with a second ring-shaped contact surface (141) and the annular or tubular glass member (18; 18') is provided with a first ring-shaped sealing surface (181) sealingly connected to the first ring-shaped contact surface (111) of the ion-sensitive glass membrane (11) and that is provided with a second ring-shaped sealing surface (182) connected to the second ring-shaped contact surface (141) of the substrate (14); and wherein the first and second ring-shaped sealing surfaces (181, 182) of the holding member (18) are sealingly connected by an annular section (189) of the annular or tubular glass member (18; 18').

7. Ion-sensitive glass electrode (10) according to one of the claims 3 - 6, wherein the layered structure (6) has a first stepped profile with the ion-sensitive glass membrane (11) having a diameter (d11) that is larger than the diameter (d14) of the substrate (14), which stepped profile of the layered structure (6) complements a second stepped profile provided at the annular end face (181, 182) of the holding member (18).

8. Ion-sensitive glass electrode (10) according to one of the claims 3-7, wherein the first ring-shaped sealing surface (181) of the holding member (18) and the first ring-shaped contact surface (111) of the ion-sensitive glass membrane (11) as well as the second ring-shaped sealing surface (182) of the holding member (18) and the second ring-shaped contact surface (141) of the substrate (14) are bonded with one another;

a) by diffused material of the adjoining ring-shaped sealing and contact surfaces (181, 111; 182, 141); or
b) by glass bonding material that has been arranged, melted and solidified between the adjoining ring-shaped sealing and contact surfaces (181, 111; 182, 141);
c) by metal bonding material that has been arranged, melted and solidified between the adjoining ring-shaped sealing and contact surfaces (181, 111; 182, 141).

9. Ion-sensitive glass electrode (10) according to claim 8, wherein

a) the bonding material has been deposited on at least one of the adjoining ring-shaped sealing and contact surfaces (181, 111; 182, 141) by a deposition process; or
b) the bonding material has been deposited in form of preforms, such as a first annular sealing preform (151) placed between the first ring-shaped sealing surface (181) and the first contact surface (111), as well as a second annular sealing preform (151) placed between the second ring-shaped sealing surface (182) and the second contact surface (141), which preforms have been melted and solidified.

10. Ion-sensitive glass electrode (10) according to one of the claims 1-9, wherein the thermal expansion coefficient ($\alpha_{11}$) of the ion-sensitive glass membrane (11) is smaller than the thermal expansion coefficient ($\alpha_{14}$, $\alpha_{18}$) of the at least one holding member (4; 18, 18'), in particular the substrate (14) and/or the annular or tubular glass member (4; 18, 18').

11. Ion-sensitive glass electrode (10) according to claim 10, wherein the ion-sensitive glass membrane (11) and the at least one holding member (4; 18, 18'), in particular the substrate (14) and/or the annular or tubular glass member (4; 18, 18'), are connected or deposited upon one another under a first process temperature above the maximum operating temperature of the measurement unit (1).

12. Ion-sensitive glass electrode (10) according to claim 10 or 11, wherein the thermal expansion coefficient ($\alpha_{11}$) of the ion-sensitive glass membrane (11) and the thermal expansion coefficient ($\alpha_{14}$) of the at least one holding member (4; 18, 18'), in particular the substrate (14) and/or the annular or tubular glass member (4; 18, 18') and ratio of the thermal expansion coefficient ($\alpha_{11}$) of the ion-sensitive glass membrane (11) and the thermal expansion coefficient ($\alpha_{18}$) of the holding member (18) differ by a value in the range from 1 % -12.5 %.

13. Measurement unit (1) for an ion-sensitive solid-state electrode (10) as defined in one of the claims 1 - 12 comprising a layered structure (6) with the substrate (14) and the ion-sensitive glass membrane (11) in the embodiment of a glass membrane, which directly or via at least one intermediate layer (12; 13) adheres to the substrate (14).

14. Method for manufacturing an ion-sensitive solid-state electrode (10) as defined in one of the claims 1 - 12 comprising the steps of

   a) providing at least one holding member (14; 18; 18');
   b) providing an ion-sensitive glass membrane (11);
   c) connecting the ion-sensitive glass membrane (11) to the at least one holding member (14; 18; 18') such that the ion-sensitive glass membrane (11) is held under compressive stress over the whole range or part of the range of the specified operating temperature of the ion-sensitive glass electrode (10).

15. Method for manufacturing an ion-sensitive solid-state electrode (10) according to claim 14 comprising the steps of

   a) providing at least one holding member (14; 18; 18'), in particular the substrate (14) and/or the annular or tubular glass member (4; 18, 18'), with a thermal expansion coefficient ($\alpha_{14}$, $\alpha_{18}$) there is larger than the thermal expansion coefficient ($\alpha_{11}$) of the ion-sensitive glass membrane (11); and
   b) connecting the ion-sensitive glass membrane (11) and the at least one holding member (4; 18, 18'), in particular the substrate (14) and/or the annular or tubular glass member (4; 18, 18'), under a first process temperature above the maximum operating temperature of the measurement unit (1).

**Fig. 1**

100

9

4

10

2

3

1

5

8

14

18

20  11  6

**Fig. 2**

**Fig. 3**

**Fig. 4a** 18'

x

181

18, (3)

(151)

111

11

**Fig. 4b** 18, (3)

181

111

(151)

11

**Fig. 4c** 18, (3)

(151)

11

**Fig. 5a**

**Fig. 5b**

**Fig. 5c**

**Fig. 6**

Fig. 7c

Fig. 7b

Fig. 7a

Europäisches
Patentamt

European
Patent Office

Office européen
des brevets

## EUROPEAN SEARCH REPORT

Application Number

EP 18 15 4257

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 923 625 A (FISCHER DAVID J ET AL) 2 December 1975 (1975-12-02) | 1-6, 8-11, 13-15 | INV.<br>G01N27/333<br>G01N27/36<br>G01N27/30 |
| Y | * figures 1,2 *<br>* column 3, line 8 - column 7, line 41 *<br>* column 1, line 13 - line 31 *<br>----- | 12 | |
| X | US 5 565 076 A (TOPPING JOSEPH C [US] ET AL) 15 October 1996 (1996-10-15)<br>* figures 2, 3 *<br>* column 16, line 40 - column 17, line 59 *<br>----- | 1,2,14 | |
| X | JP S58 53746 B (MATSUSHITA ELEC IND CO LTD) 1 December 1983 (1983-12-01) | 1-11, 13-15 | |
| Y | * column 3, line 30 - column 4, line 51; figure 1 *<br>* column 1, line 35 - line 50 *<br>----- | 12 | |
| X | JP S58 191558 U (UNKNOWN) 20 December 1983 (1983-12-20) | 1-11, 13-15 | |
| Y | * figures 1, 2,3 *<br>* paragraph [0001] *<br>----- | 12 | TECHNICAL FIELDS SEARCHED (IPC)<br><br>G01N |
| X | US 4 182 667 A (DICKINSON THOMAS [GB] ET AL) 8 January 1980 (1980-01-08) | 1-11, 13-15 | |
| Y | * figures 1, 2 *<br>* paragraph [0002] *<br>* claim 0001 *<br>----- | 12 | |
| X | US 2009/236224 A1 (YAMASATO MASAHARU [JP] ET AL) 24 September 2009 (2009-09-24) | 1,2,14 | |
| A | * figures 1,4 *<br>* paragraph [0033] - paragraph [0055] *<br>----- | 8,9 | |
| | -/-- | | |

The present search report has been drawn up for all claims

| Place of search | Date of completion of the search | Examiner |
|---|---|---|
| Munich | 16 April 2018 | Melzer, Katharina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 18 15 4257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | JP H08 119684 A (ISHIZUKA GLASS)<br>14 May 1996 (1996-05-14)<br>* figure 1 *<br>* paragraph [0017] - paragraph [0018] *<br>----- | 1,14<br><br>8,9 | |
| X<br><br>Y | US 2017/160228 A1 (PECHSTEIN TORSTEN [DE]<br>ET AL) 8 June 2017 (2017-06-08)<br>* figure 1 *<br>* paragraph [0050] - paragraph [0062] *<br>* paragraph [0020] *<br>----- | 1,2,13,<br>14<br>12 | |
| X,D | US 4 280 889 A (SZONNTAGH EUGENE L)<br>28 July 1981 (1981-07-28)<br>* figures 1, 2 *<br>* column 2, line 28 - column 4, line 65 *<br>----- | 1-6,8,9,<br>13,14 | |
| X,D<br><br>A | US 4 632 732 A (FOG AGNER [DK] ET AL)<br>30 December 1986 (1986-12-30)<br>* figure 7 *<br>* column 8, line 5 - line 37 *<br>* column 6, line 20 - column 8, line 4 *<br>----- | 1,2,14<br><br>5 | |
| | | | **TECHNICAL FIELDS SEARCHED (IPC)** |

The present search report has been drawn up for all claims

| Place of search | Date of completion of the search | Examiner |
|---|---|---|
| Munich | 16 April 2018 | Melzer, Katharina |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 18 15 4257

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2018

| Patent document cited in search report | | Publication date | Patent family member(s) | | Publication date |
|---|---|---|---|---|---|
| US 3923625 | A | 02-12-1975 | NONE | | |
| US 5565076 | A | 15-10-1996 | AU | 5735896 A | 11-12-1996 |
| | | | US | 5565076 A | 15-10-1996 |
| | | | WO | 9637772 A1 | 28-11-1996 |
| JP S5853746 | B | 01-12-1983 | | | |
| JP S58191558 | U | 20-12-1983 | JP | H0128454 Y2 | 30-08-1989 |
| | | | JP | S58191558 U | 20-12-1983 |
| US 4182667 | A | 08-01-1980 | NONE | | |
| US 2009236224 | A1 | 24-09-2009 | CN | 101080632 A | 28-11-2007 |
| | | | JP | 4746561 B2 | 10-08-2011 |
| | | | JP | WO2006064935 A1 | 12-06-2008 |
| | | | US | 2009236224 A1 | 24-09-2009 |
| | | | WO | 2006064935 A1 | 22-06-2006 |
| JP H08119684 | A | 14-05-1996 | NONE | | |
| US 2017160228 | A1 | 08-06-2017 | CH | 711880 A2 | 15-06-2017 |
| | | | CN | 107037107 A | 11-08-2017 |
| | | | DE | 102015121364 A1 | 08-06-2017 |
| | | | US | 2017160228 A1 | 08-06-2017 |
| US 4280889 | A | 28-07-1981 | NONE | | |
| US 4632732 | A | 30-12-1986 | DE | 3373541 D1 | 15-10-1987 |
| | | | DK | 113282 A | 16-09-1983 |
| | | | EP | 0103599 A1 | 28-03-1984 |
| | | | JP | S59500386 A | 08-03-1984 |
| | | | US | 4632732 A | 30-12-1986 |
| | | | WO | 8303304 A1 | 29-09-1983 |

EPO FORM P0459

For more details about this annex : see Official Journal of the European Patent Office, No. 12/82

**EP 3 517 943 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19714474 A1
- DE 3727485 A1
- DE 2220841 A1
- US 4632732 A
- DE 19620568 A1
- DE 10018750 C2
- US 4133735 A
- US 4280889 A
- EP 0420983 A1
- WO 0104615 A1